# EUROPEAN PATENT SPECIFICATION

(11) **EP 4 238 872 B1**
(45) Date of publication and mention of the grant of the patent: **09.09.2026**
(21) Application number: 23187424.9
(22) Date of filing: 19.02.2021
(51) Int. Cl.: B64D 27/24, B64D 33/00, B64U 50/19

(54) **AIRCRAFT ENGINE**
FLUGZEUGTRIEBWERK
MOTEUR D'AVION

(43) Date of publication of application: 06.09.2023
(60) Divisional application: 24159903.4 / 4 353 605
(62) Document number(s) of the earlier application(s) in accordance with Art. 76 EPC: 21158167.3 / 3 998 213
(73) Proprietor: Archer Aviation Inc., San Jose, CA 95134 (US)
(72) Inventor: Vermeiren, Sébastien, 80997 Munich (DE)
(74) Representative: Finnegan Europe LLP

(56) References cited:
- WO-A1-2017/123699
- US-A1- 2009 272 854
- US-A1- 2016 137 305
- US-A1- 2018 086 448
- US-A1- 2020 277 069
- US-B1- 10 608 505

## Description

### TECHNICAL FIELD

The present invention relates to the field of engines. In particular, the present invention relates to the field of aircraft engines. Still more in particular, the present invention relates to the field of electrically driven aircraft engines.

### STATE OF THE ART

Electrically driven aircraft engines are used nowadays for the propulsion of aircrafts. For example, US 2020/0198792 A1, US 2019/0203735 A1, US 2009/0272854 A1 and WO 2019/243767 A1 describe aircrafts comprising electrically driven propulsors. Moreover, such electrically driven engines are also used for vertical take-off and landing (vtol) aircrafts, wherein the electrically driven engines are configured both to propel the aircraft and to operate vertical take-off and vertical landing of the aircraft. Examples of such vtol aircrafts are disclosed in US 2016/0023754 A1, US 10,597,133 B2 and US 10,293,914 B2.

Such electrically driven engines are provided with an Engine Control Unit (ECU) that ultimately controls the thrust produced by the engine and guarantees optimal engine performances. The ECU may control various parameters of the engine controlling the electric motor and other systems and devices of the engine, such as the de-icing system. Examples of parameters controlled by the ECU are the engine rotational speed, the blade pitch angle, the conversion of DC current in AC current, and so on. The ECU may control these parameters on the basis of various input parameters. For example, the ECU may receive input signals not only as input commands regarding speed and orientation of the aircraft, but also from position sensors, temperature sensors and so on.

The ECU needs to be safely held in place, to be protected from ambient conditions (such as rain, ice, dust, etc.) and, in some cases, to be cooled down. Moreover, the ECU should be placed as close as possible to the electric motor it controls, in order to minimize electromagnetic interferences (EMI). Ideally, these requirements should be met with minimum penalty in terms of mass, volume and aerodynamic efficiency.

According to the state of the art, the ECU is housed in a casing that is mounted on the side of the engine, for example on the outer surface of the fan case, or on the nearby wing or fuselage.

This solution has several drawbacks. First of all, this solution requires long cabling from the ECU to the electric motor, thus increasing EMI. This requires higher masses in order to mitigate these effects, such as cable shielding, EMI filters and the like. Moreover, for large ECU comprising several components and several Printed Circuit Boards (PCBs), the available volume at the side of the engine may lead to complex form factors and thus to heavier casings and complex assembly sequences. Furthermore, the cooling capacity available on the side of the engine may be limited.

It is thus an object of the present invention to provide an electrically driven aircraft engine overcoming or at least mitigating one or more of the problems of the prior art.

### SUMMARY

The present invention as per claim 1 is based on the idea of arranging the ECU of an electrically driven aircraft engine within the volume defined by the main flow of air that causes the thrust of the engine. The main flow of air that causes the thrust of the engine includes the flow impacting and entering the engine through the engine intake side, flowing through the engine airflow compression section and exiting the engine from the engine exhaust side, thus providing the thrust force. The main flow of air encloses a volume through which air does not flow and wherein various mechanical elements of the airflow compression section of the engine, such as bearings, supports, shaft, etc., are housed. According to an embodiment of the invention, the ECU is located within this volume through which the main flow of air does not flow, said ECU having an axially symmetric shape, for example said ECU has a cross section that is circular or a regular polygon.

According to an embodiment of the present invention, an engine for an aircraft is provided, wherein the engine comprises a rotor, an electric motor actuating the rotation of the rotor and an ECU controlling the electric motor, wherein the rotation of the rotor provides a main flow of air causing the thrust of the engine and wherein the ECU is located within the volume defined by the main flow of air. Arranging the ECU within the volume defined by the main flow of air of the engine allows reducing the distance between the ECU and the electric motor, thus minimizing EMI. Accordingly, a very compact engine design may be achieved. Moreover, the need for EMI protections is reduced, thus reducing weight and material required. Possible resonances between AC cables, motor coils and ECU are minimized as well. The engine may further comprise a stator operating with the rotor in the compression section of the engine. According to a particular embodiment, the ECU may be integrated around the centerline or the rotation axis of the engine. The ECU may thus surround the rotation axis of the engine. For example, the ECU has an axially symmetric shape and the axis of symmetry of the ECU may coincide with the rotation axis of the engine. The engine may be further provided with a fan case that encloses the main flow of air. The ECU according to this embodiment is thus not arranged on the outer surface of the fan case, but rather within the volume defined by the fan case and thus close to the electric motor it controls. The engine according to the present invention may be provided with a hub comprising a spinner and/or a back-cone. The spinner is part of the engine intake side. The back-cone is part of the engine exhaust side. The hub may further comprise an intermediate volume arranged between the spinner and the back-cone. This intermediate volume may define the compression section of the engine. The ECU is be arranged within the volume of the hub.

According to a further embodiment of the present invention, an engine is provided further comprising a duct housing the rotor, so that the main flow of air flows within the duct. According to this embodiment, therefore, the engine is a ducted fan engine. The main flow of air flows within the duct and the ECU is in turn arranged within the volume defined by the main flow. For example, the ECU could be directly located within the main flow of air, so as to be directly hit by the main flow of air. Alternatively, the duct may house a volume through which air does not flow, for example the hub volume, and the ECU could be located within this volume. The duct may comprise an air inlet section, an intermediate section and an exhaust section. The intermediate section may house the compression section of the engine. With respect to the longitudinal direction of the engine, the ECU may be arranged for example so as to be housed in the intermediate section and/or in the exhaust section of the duct. For example, the ECU may be arranged so as at least a part of the ECU is housed in the intermediate section and another part is housed in the exhaust section.

According to a further embodiment of the present invention, an engine is provided, wherein the ECU has a cross section that is circular or a regular polygon, for example a pentagon, an hexagon or an octagon. The integration of such ECU around the centerline or the rotation axis of the engine is particularly advantageous. For example, the ECU may be cylindrical, frusto-conical or conical. Preferably, the ECU may comprise a plurality of PCBs, wherein each PCB has a circular or a central symmetry shape and wherein the PCBs are stacked, so as to form a cylindrical- or substantially cylindrical-shaped ECU. The ECU may have an axially symmetric shape and the axis of symmetry of the ECU may coincide with the rotation axis of the engine. A stack of PCBs may be particularly easy and quick to assemble.

The Z engine further comprises a hub and the ECU is located within the hub of the engine. Preferably, at least a section of the hub together with the ECU are configured as plug and play components of the engine. Plug and play components, or line replaceable unit (LRU) components, can be easily connected or disconnected from the engine, for example from its core section. Accordingly, installation and maintenance are optimized because the assembly/disassembly times are reduced. According to an example, plug and play is achieved by providing the mating plug and play sections with cables, connectors and mechanical fastening means, such as screws, that are connected by hand when assembling the engine. According to an alternative and advantageous embodiment, there are no cables to be connected for the mating plug and play sections. For example, the mating section arranged towards the electric motor may comprise an interface PCB hosting solely connectors female parts. The other mating section, for example the section on the back-cone side, may comprise solely the corresponding connectors male parts. Accordingly, the back-cone can easily be plugged thus coupling all the connectors. Mechanical fastening means, such as screws, may finally be fastened. This embodiment is particularly advantageous because it can be easily assembled. Preferably, all the connectors are arranged axially around the centerline of the system to further simplify the assembling process.

For example, the section of the hub that, together with the ECU, is configured as plug and play component comprises female and/or male connectors and the ECU comprises male and/or female connectors mating the connectors of the section of the hub. The term "section of the hub" does not only indicate a section of the surface of the hub defining the volume of the hub, but also possible inner walls and or surfaces located within the volume enclosed by the hub. Accordingly, the connectors of the hub are not necessarily located on the surface of the hub defining the volume of the hub but they may preferably be located on inner walls and/or surfaces that are housed within the volume enclosed by the hub and that preferably face the region of the ECU.

According to alternative embodiments, the section of the hub comprises only female connectors and the ECU comprises only male connectors mating the female connectors of the hub. Alternatively, the section of the hub comprises only male connectors and the ECU comprises only female connectors mating the male connectors of the hub.

According to a further embodiment of the present invention, an engine is provided, wherein the ECU comprises a plurality of PCBs and wherein one or more of the PCBs are placed on the internal surface of the hub. For example, a plurality of PCBs of the ECU could be arranged circumferentially along the entire inner perimeter of the hub. For example, the PCBs could be distributed along an internal circumference of the hub, i.e. along a circumference of the internal surface of the hub. The internal surface of the hub could have a polygonal cross-section, for example hexagonal or octagonal, and one or more of the surfaces corresponding to the sides of the polygon may carry one or more of the PCBs of the ECU. For example, each of the surfaces corresponding to the sides of the polygon may carry at least a PCB or only a PCB.

According to a further embodiment of the present invention, an engine is provided, wherein the hub comprises one or more fins configured to cool the ECU, for example by forced convection and/or by directing at least part of the main flow toward the ECU. The fins may cool the ECU by forced convection improving thermal conduction from the inner volume where the ECU is located toward the region where the main flow of air flows. Alternatively or additionally, the fins may be shaped in such a manner so as to direct at least part of the main flow of air toward the ECU. According to these embodiments, the ECU has direct access to the cooling flow, so that cooling of the ECU is optimized. In particular, according to this embodiment, the main flow of the engine is advantageously also used to cool the ECU. Preferably, the electronic components of the ECU that require higher cooling are arranged in such a manner so as to directly face the fins. For example, they may be arranged along the outer periphery of the ECU. According to a further embodiment, the electronic components of the ECU that require higher cooling may be connected to the main air flow acting as heat sink, for example through thermally conductive material or heat pipes. If one or more of the PCBs are placed on the internal surface of the hub, they could be directly placed against the fins.

According to a further embodiment of the present invention, an engine is provided, wherein the fins are arranged circumferentially around the entire perimeter of the hub, for example, the fins are uniformly distributed around the entire perimeter of the hub. Cooling of the ECU is thus further optimized.

According to a further embodiment of the present invention, an engine is provided, wherein the engine comprises an airflow compression section downstream of the rotor and the ECU is located in correspondence to and/or downstream of the compression section. Locating the ECU downstream of the compression section is advantageous for cooling purposes. In particular, if the main flow of air is used for cooling the ECU, for example by means of fins directing at least part of the flow towards the ECU, the high flow speed obtained downstream of the compression section improves and facilitates cooling. For example, part of the ECU may be located in correspondence to the compression section and another part of the ECU may be located downstream of the compression section. For example, the part of the ECU located downstream of the compression section may comprise the components of the ECU that require higher cooling.

According to a further embodiment of the present invention, an engine is provided, wherein the engine further comprises a back-cone and the ECU is located in the back-cone. The back-cone of the engine may form the aerodynamic central section of the engine at the exhaust region of the engine. The back-cone may be fixed or it may rotate. In case of rotating back-cone, the ECU may be integral with the back-cone so as to rotate as well. In this case, slip ring connections may be used for the cabling connecting the ECU with the other components of the engine. Preferably, the back-cone may comprise outlet guide vanes and the ECU may be located in correspondence to the outlet guide vanes or downstream therefrom. For example, according to a particular embodiment, the outlet guide vane may be configured to act as fins for cooling down the ECU. According to a preferred embodiment, the back-cone and the ECU are configured as plug and play components of the engine. Still according to a further embodiment, the back-cone comprises one or more fins configured to cool the ECU by directing at least part of the main flow toward the ECU. According to this embodiment, the ECU has direct access to the cooling flow, so that cooling of the ECU is optimized. Preferably, the fins are arranged circumferentially around the entire perimeter of the back-cone, for example, the fins are uniformly distributed around the entire perimeter of the back-cone. Cooling of the ECU is thus further optimized. Preferably, the electronic components of the ECU that require higher cooling are arranged in such a manner so as to directly face the fins of the back-cone. For example, they may be arranged along the outer periphery of the ECU.

According to a further embodiment of the present invention, an engine is provided, wherein the engine further comprises a spinner and the ECU is located in the spinner. The spinner is part of the engine intake side. According to this embodiment, the ECU is thus located towards the front end of the engine, in the flow inlet region of the engine. The spinner may be fixed, i.e. a fixed nose cone, or it may rotate. In case of rotating spinner, the ECU may be integral with the spinner so as to rotate as well. In this case, slip ring connections may be used for the cabling connecting the ECU with the other components of the engine. According to a preferred embodiment, the spinner and the ECU are configured as plug and play components of the engine. The spinner may comprise one or more fins configured to cool the ECU by directing at least part of the main flow toward the ECU. According to this embodiment, the ECU has direct access to the cooling flow, so that cooling of the ECU is optimized. Preferably, the fins are arranged circumferentially around the entire perimeter of the spinner, for example, the fins are uniformly distributed around the entire perimeter of the spinner. Cooling of the ECU is thus further optimized. Preferably, the electronic components of the ECU that require higher cooling are arranged in such a manner so as to directly face the fins of the spinner. For example, they may be arranged along the outer periphery of the ECU.

The engine according to the invention comprises cabling for connecting the ECU. In general, this cabling may comprise all wires and cables that are necessary for managing all input and output signals of the ECU. For example, this cabling may comprise power supply cables, for example DC or AC power supply cables, CAN or communication wires, anti-icing wires, sensor wires, and so on.

According to a further embodiment of the present invention, an engine is provided, wherein the engine comprises one or more hollow outlet guide vanes and wherein the hollow outlet guide vanes house at least part of or all the cabling of the ECU. The outlet guide vanes may comprise one or more housings or channels for housing the cabling of the ECU. For example, the entire cabling of the ECU may be housed in a single hollow outlet guide vane. Alternatively, the cabling of the ECU may be split so as to be housed in two or more dedicated hollow outlet guide vanes of the engine.

According to a further embodiment of the present invention, an engine is provided, wherein the engine comprises one or more hollow pylons and wherein the hollow pylons house at least part of or all the cabling of the ECU. The one or more hollow pylons may connect the hub of the engine with the fan casing area of the engine. The one or more hollow pylons may have a circular cross section. Preferably, the one or more hollow pylons may have a airfoil-profiled cross-section in order to minimize the aerodynamic losses of the system. The airfoil-profiled cross-section of the pylon may be neutral, so as to cause no lift or airflow deflection, or can be used to deflect the airflow. In particular, the pylon section between the hub and the casing may be inside the main air flow, so that an airfoil-profiled cross section is particularly advantageous. According to an embodiment of the invention, the entire cabling of the ECU is housed in a single pylon. Alternatively, the cabling of the ECU may be split so as to be housed in two or more dedicated hollow pylons. Still according to further embodiments of the invention, the cabling of the ECU may be split so that a part of the cabling is housed in one or more dedicated hollow pylons and another part is housed in one or more dedicated hollow outlet guide vane of the engine.

According to a further embodiment of the present invention, an aircraft is provided, comprising one or more engines according to any of the embodiments described above. The one or more engines may be configured to propel the aircraft. According to a further embodiment, the aircraft may be provided with a plurality of identical engines, wherein the engines are configured according to one of the embodiments described above.

According to a further embodiment of the present invention, an aircraft is provided, wherein the aircraft is a vertical take-off and landing (vtol) aircraft. The one or more engines according to one or more of the embodiments described above may be configured not only to propel the aircraft, but also to operate vertical take-off and/or vertical landing of the aircraft. Examples of vtol aircrafts that may comprise one or more engines according to any of the embodiments described above are described in US 2016/0023754 A1, US 10,597,133 B2 and US 10,293,914 B2. For example, one or more of the engines indicated with reference number 28 in US 10,597,133 B2 or in US 10,293,914 B2 may be configured according to one or more of the embodiments described above.

According to a further embodiment of the present invention, an aircraft is provided, comprising a plurality of engines according to any of the embodiments described above, for example thirty-six. For example, all the engines indicated with reference number 28 in US 10,597,133 B2 or in US 10,293,914 B2 may be configured according to one or more of the embodiments described above.

### BRIEF DESCRIPTION OF THE FIGURES

The present invention will be described with reference to the attached figures in which the same reference numerals indicate the same parts and/or similar and/or corresponding parts of the system.
Figure 1 schematically shows an exploded view of an engine according to an embodiment of the present invention;
Figure 2 schematically shows a cutaway section of an engine according to an embodiment of the present invention;
Figure 3 schematically shows a 3D view of a detail of an embodiment of the present invention;
Figure 4 schematically shows a 3D view of a detail of a further embodiment of the present invention.

### DETAILED DESCRIPTION

Hereinafter, the present invention is described with reference to particular embodiments, as illustrated in the attached figures. However, the present invention is not limited to the particular embodiments described in the following detailed description and represented in the figures, but rather the described embodiments simply exemplify the various aspects of the present invention, the purpose of which is defined by the claims. Further modifications and variations of the present invention will be clear to those skilled in the art.

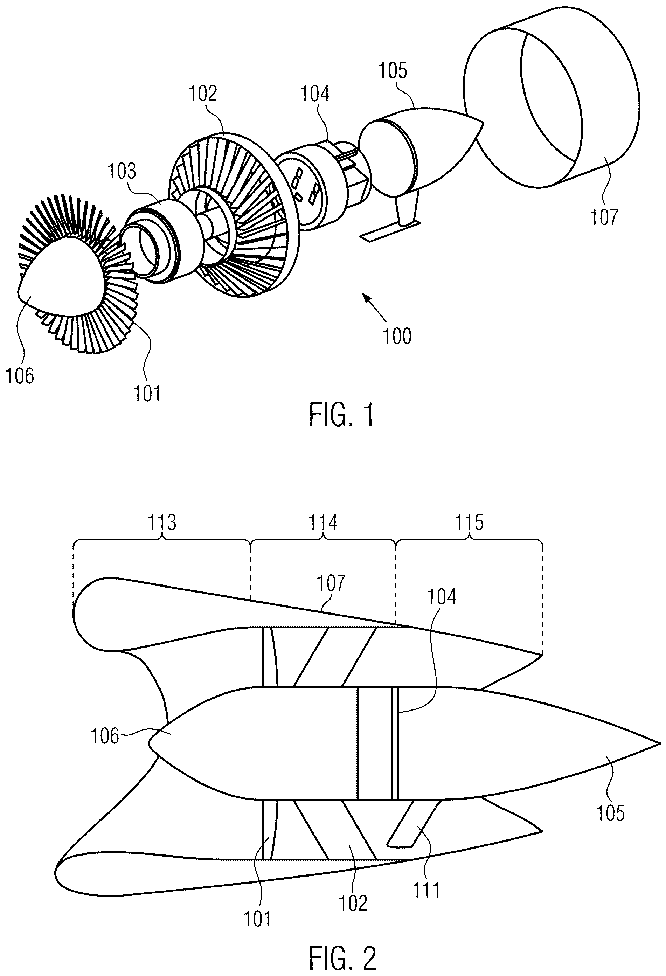

Figure 1 schematically shows an exploded view of an engine 100 according to an embodiment of the present invention.

The engine 100 comprises a rotor 101 and a stator 102. The rotation of the rotor 101 provides a main flow of air causing the thrust of the engine 100. The engine 100 further comprises an electric motor 103 that actuates the rotation of the rotor 101. The electric motor 103 may operate on the basis of magnets and coils in any manner as known by those skilled in the art. The engine 100 further comprises a ECU 104 that is configured to control the electric motor 103.

For example, the ECU 104 may control the output of the electric motor 103 so as to regulate the rotational speed of the rotor 101. The ECU 104 may perform this control on the basis of various input parameters. For example, the ECU may receive input signals not only as input commands regarding speed and orientation of the aircraft, but also from position sensors, temperature sensors and so on. Ultimately, therefore, the ECU 104 controls the thrust produced by the engine 100 and guarantees optimal engine performances.

As can be seen in the figure, the ECU 104 is contained within the volume defined by the main flow of air that causes the thrust of the engine and that is obtained by the rotation of the rotor 101.

In particular, in the embodiment shown in the figure, the ECU 140 is arranged around the rotation axis of the engine 100.

Still more in particular, the engine 100 of figure 1 comprises a spinner 106 at the intake side and a back-cone 105 at the exhaust site. The ECU 140 is arranged in the back-cone 105.

The ECU 104 schematically shown in the figure has a substantially cylindrical shape so as to properly fit into the volume of the back cone 105. Alternatively, the ECU could have a conical or frusto-a conical shape so as to optimize space occupation in the back-cone 105. In general, the ECU may have an axially symmetric shape so that the axis of symmetry of the ECU may coincide with the rotation axis or the centerline of the engine.

For example, the ECU 104 could comprise a stack of PCBs that are each configured so that the stack has an axially symmetric shape, for example a cylindrical, conical or frusto-conical shape.

Figure 1 further shows schematically that the engine 100 comprises a containment component or duct 107 that houses the various components of the engine 100. The main flow of air that causes the thrust of the engine 100 flows inside the volume defined by the duct 107. Engine 100 of figure 1 is thus a ducted fan engine.

Figure 2 schematically shows a cutaway section of the engine. The figure shows that the duct 107 comprises an air inlet section 113, an intermediate section 114 and an exhaust section 115. The air inlet section 113 of the duct 107 houses the spinner 106. The intermediate section 114 houses the compression section of the engine. In particular, the intermediate section 114 houses the rotor 101 and the stator 102. The exhaust section 115 houses at least part of the back-cone 105. In particular, in the example shown in figure 2, part of the back-cone further protrudes downstream of the exhaust section 115 of the duct 107.

In the example schematically shown in figure 2, part of the ECU 104 is housed in the intermediate section 114 of the duct 107 and another part is housed in the exhaust section 115 of the duct 107.

The engine according to the invention further comprises cabling for connecting the ECU. In general, this cabling may comprise all wires and cables that are necessary for managing all input and output signals of the ECU. For example, this cabling may comprise power supply cables, for example DC or AC power supply cables, CAN or communication wires, anti-icing wires, sensor wires, and so on.

According to an embodiment of the invention, at least part of the cabling for connecting the ECU is housed in one or more hollow outlet guide vanes of the engine.

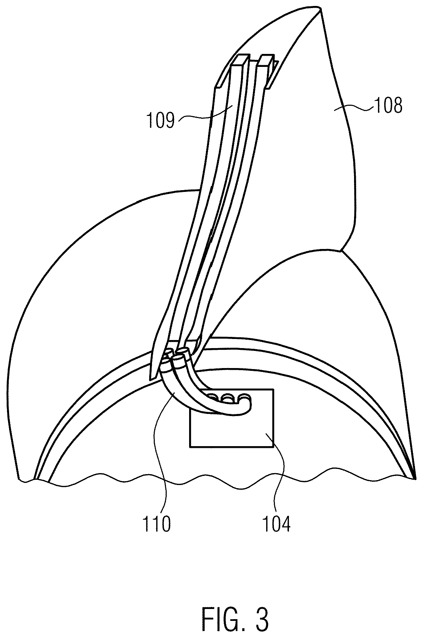

Figure 3 schematically shows a representation of a detail of such an embodiment. A portion of an outlet guide vane 108 of the engine is shown. The outlet guide vane 108 is hollow. In particular, the outlet guide vane 108 comprises a housing or channel 109 which is configured for housing the cabling 110 of the ECU 104. The figure schematically shows that cabling 110 comprises four cables but the number of cables of the cabling 110 housed in the channel 109 is not limited thereto. Moreover, even if the figure schematically shows that the outlet guide vane comprises a single channel 109, the outlet guide vane may comprise a plurality of housings or channels.

According to this embodiment, the cables of the cabling 110 can be brought from outside of the engine, i.e. even from beyond the outer diameter of the engine defined for example by the duct 107 to the inner core, or hub, of the engine, where the ECU 104 is located.

The engine 100 may comprise two or more hollow outlet guide vanes and the cabling 110 of the ECU may be split on order to be housed in two or more of the hollow outlet guide vanes.

According to a further embodiment of the invention, at least part of the cabling for connecting the ECU is housed in a hollow pylon, for example in a pylon that connects the hub of the engine with the containment component. For example, the pylon may comprise one or more housings or channels configured for housing the cabling of the ECU. The pylon may be placed for example downstream of the outlet guide vanes row of the engine.

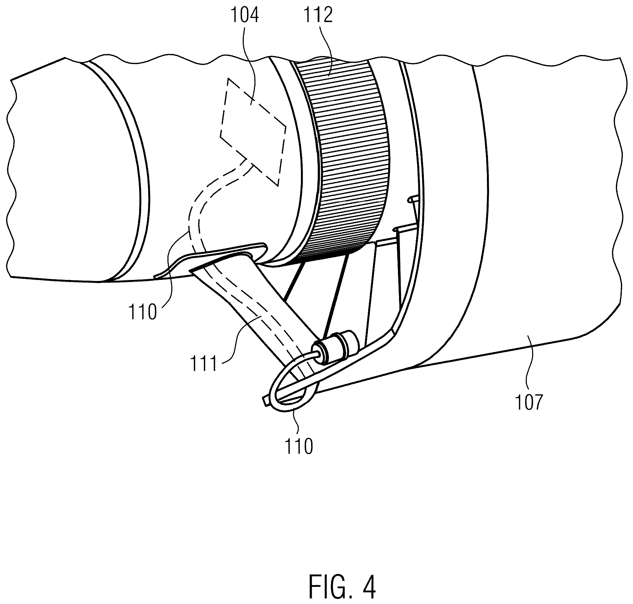

Figure 4 schematically shows a representation of a detail of such an embodiment. A hollow pylon 111 extends from the hub of the engine to the duct 107. The pylon 111 houses cabling 110 of the ECU 104.

The pylon 111 may have a circular cross section. Preferably, the pylon 111 may have a airfoil-profiled cross-section in order to minimize the aerodynamic losses of the system. The airfoil-profiled cross-section of the pylon 111 may be neutral, so as to cause no lift or airflow deflection, or can be used to deflect the airflow.

Also according to this embodiment, the cables of the cabling 110 can be brought from outside of the engine, i.e. even from beyond the outer diameter of the engine defined for example by the duct 107 to the inner core, or hub, of the engine, where the ECU 104 is located.

The engine 100 may comprise two or more hollow pylons and the cabling 110 of the ECU may be split on order to be housed in two or more of the hollow pylons.

Still according to further embodiments of the invention, the engine may comprise one or more hollow outlet guide vanes and one or more hollow pylons and the cabling of the ECU may be split, so that part of the cabling is housed in one or more of the hollow outlet guide vanes and another part is housed in one or more of the hollow pylons.

Figure 4 schematically shows also a plurality of fins 112 configured to cool the ECU 104 by directing at least part of the main flow of the engine toward the ECU 104. The fins 112 are arranged circumferentially around the entire perimeter of the hub so as to maximize the cooling effect. In particular, the fins 112 are uniformly distributed around the perimeter of the hub. The fins 112 extrude in the main air flow of the engine so as to direct part of the flow toward the ECU 104.

Although the present invention has been described with reference to the embodiments described above, it is clear to those skilled in the art that it is possible to make different modifications, variations and improvements of the present invention in light of the teaching described above and in the attached claims, without departing from the object and the scope of protection of the invention.

For example, even if figure 3 shows both the pylon 111 and the fins 112, these features are independent from each other and they are not necessarily combined in one and the same embodiment of the invention.

Moreover, even if the figures show a stator, this is not a mandatory component of the engine according to the invention.

Finally, aspects that are deemed to be known by those skilled in the art have not been described in order to avoid needlessly obscuring the invention described.

For example, no details of the design and functioning principles of an electrically driven aircraft engine have been provided since these are deemed to be known by those skilled in the art and since the present invention may be implemented in various types of electrically driven aircraft engines, independently of the actual particular structural and/or electronic architecture of the engine.

Moreover, no details of the architecture of the ECU nor of its PCBs have been described since these are deemed to be known by those skilled in the art and since the present invention may be implemented with various types of ECUs, independently of the actual electronic architecture of same.

Consequently, the invention is not limited to the embodiments described above, but is only limited by the scope of protection of the attached claims.

## Claims

1. Engine (100) for an aircraft comprising a rotor (101), an electric motor (103) actuating the rotation of said rotor (101) and an ECU (104) controlling said electric motor (103), said engine (100) further comprising a hub, said ECU (104) being located in said hub,
wherein the rotation of said rotor (101) provides a main flow of air causing the thrust of the engine (100) and said ECU (104) is located within the volume defined by said main flow,
**characterized in that:**
said ECU (104) has an axially symmetric shape, for example said ECU (104) has a cross section that is circular or a regular polygon.

2. Engine (100) according to claim 1, further comprising a duct (107) housing said rotor (101) so that said main flow of air flows within the duct (107).

3. Engine (100) according to any of the preceding claims, wherein said ECU (104) is arranged around the centerline or the rotation axis of said engine (100).

4. Engine (100) according to any one of previous claims, wherein the axis of symmetry of said ECU (104) coincides with the centerline or the rotation axis of said engine (100).

5. Engine (100) according to any of the preceding claims, wherein said ECU comprises a plurality of PCBs and wherein said PCBs are stacked so as to define the overall volume of said ECU.

6. Engine (100) according to any of the preceding claims, wherein said ECU comprises a plurality of PCBs and wherein one or more of said PCBs are placed on the internal surface of said hub.

7. Engine (100) according to any of the preceding claims, wherein said ECU (104) and at least a section of said hub are configured as plug and play components of the engine.

8. Engine (100) according to claim 7, wherein said section of said hub comprises female and/or male connectors and said ECU (104) comprises male and/or female connectors mating said connectors of said section of said hub, wherein said connectors are preferably arranged axially around the centerline.

9. Engine (100) according to claim 8, wherein said section of said hub comprises only female connectors and said ECU (104) comprises only male connectors mating said connectors of said section of said hub.

10. Engine (100) according to claim 8, wherein said section of said hub comprises only male connectors and said ECU (104) comprises only female connectors mating said connectors of said section of said hub.

11. Engine (100) according to any of the preceding claims, wherein said hub comprises one or more fins (112) configured to cool said ECU (104), for example by forced convection and/or by directing at least part of said main flow toward said ECU (104).

12. Engine (100) according to claim 11, wherein said fins (112) are arranged circumferentially around the entire perimeter of said hub.

13. Engine (100) according to any of the preceding claims, wherein said engine (100) comprises one or more hollow outlet guide vanes and wherein said hollow outlet guide vanes house at least part of or all the cabling (110) of said ECU (104).

14. Engine (100) according to any of the preceding claims, wherein said engine (100) comprises one or more hollow pylons (111) and wherein said hollow pylons (111) house at least part of or all the cabling (110) of said ECU (104).

15. Engine (100) according to any of the preceding claims, wherein said engine comprises an airflow compression section and said ECU (104) is located in correspondence to or downstream of said airflow compression section.

16. Engine (100) according to any of the preceding claims, wherein said engine (100) further comprises a back-cone (105) and said ECU (104) is located in said back-cone (105).

17. Engine (100) according to any of claims 1 to 14, wherein said engine (100) further comprises a spinner (106) and said ECU (104) is located in said spinner (106).

18. Aircraft comprising one or more engines according to any of claims 1 to 17.

19. Aircraft according to claim 18, wherein said aircraft is a vertical take-off and landing (vtol) aircraft.

20. Aircraft according to claim 19, comprising a plurality of engines according to any of claims 1 to 17, for example thirty-six.

## Patentansprüche

1. Triebwerk (100) für ein Flugzeug, umfassend einen Rotor (101), einen Elektromotor (103), der die Drehung des Rotors (101) betätigt, und eine ECU (104), die den Elektromotor (103) steuert, wobei das Triebwerk (100) ferner eine Nabe umfasst, wobei sich die ECU (104) in der Nabe befindet,
wobei die Drehung des Rotors (101) einen Hauptluftstrom bereitstellt, der den Schub des Triebwerks (100) bewirkt, und sich die ECU (104) innerhalb des durch den Hauptstrom definierten Volumens befindet,
**dadurch gekennzeichnet, dass:**
die ECU (104) eine axialsymmetrische Form aufweist, zum Beispiel die ECU (104) einen Querschnitt aufweist, der kreisförmig oder ein regelmäßiges Polygon ist.

2. Triebwerk (100) nach Anspruch 1, ferner umfassend einen Kanal (107), der den Rotor (101) aufnimmt, so dass der Hauptluftstrom innerhalb des Kanals (107) strömt.

3. Triebwerk (100) nach einem der vorhergehenden Ansprüche, wobei die ECU (104) um die Mittellinie oder die Drehachse des Triebwerks (100) herum angeordnet ist.

4. Triebwerk (100) nach einem der vorhergehenden Ansprüche, wobei die Symmetrieachse der ECU (104) mit der Mittellinie oder der Drehachse des Triebwerks (100) zusammenfällt.

5. Triebwerk (100) nach einem der vorhergehenden Ansprüche, wobei die ECU eine Vielzahl von PCBs umfasst und wobei die PCBs gestapelt sind, um das Gesamtvolumen der ECU zu definieren.

6. Triebwerk (100) nach einem der vorhergehenden Ansprüche, wobei die ECU eine Vielzahl von PCBs umfasst und wobei eine oder mehrere der PCBs an der inneren Oberfläche der Nabe angeordnet sind.

7. Triebwerk (100) nach einem der vorhergehenden Ansprüche, wobei die ECU (104) und mindestens ein Abschnitt der Nabe als Plug-and-Play-Komponenten des Triebwerks konfiguriert sind.

8. Triebwerk (100) nach Anspruch 7, wobei der Abschnitt der Nabe Buchsen- und/oder Steckverbinder umfasst und die ECU (104) Steck- und/oder Buchsenverbinder umfasst, die zu den Verbindern des Abschnitts der Nabe passen, wobei die Verbinder vorzugsweise axial um die Mittellinie herum angeordnet sind.

9. Triebwerk (100) nach Anspruch 8, wobei der Abschnitt der Nabe nur Buchsenverbinder umfasst und die ECU (104) nur Steckverbinder umfasst, die zu den Verbindern des Abschnitts der Nabe passen.

10. Triebwerk (100) nach Anspruch 8, wobei der Abschnitt der Nabe nur Steckverbinder umfasst und die ECU (104) nur Buchsenverbinder umfasst, die zu den Verbindern des Abschnitts der Nabe passen.

11. Triebwerk (100) nach einem der vorhergehenden Ansprüche, wobei die Nabe eine oder mehrere Rippen (112) umfasst, die dazu konfiguriert sind, die ECU (104) zu kühlen, zum Beispiel durch erzwungene Konvektion und/oder durch Lenken mindestens eines Teils des Hauptstroms in Richtung der ECU (104).

12. Triebwerk (100) nach Anspruch 11, wobei die Rippen (112) in Umfangsrichtung um den gesamten Umfang der Nabe herum angeordnet sind.

13. Triebwerk (100) nach einem der vorhergehenden Ansprüche, wobei das Triebwerk (100) eine oder mehrere hohle Auslassleitschaufeln umfasst und wobei die hohlen Auslassleitschaufeln zumindest einen Teil oder die gesamte Verkabelung (110) der ECU (104) aufnehmen.

14. Triebwerk (100) nach einem der vorhergehenden Ansprüche, wobei das Triebwerk (100) einen oder mehrere hohle Pylone (111) umfasst und wobei die hohlen Pylone (111) zumindest einen Teil oder die gesamte Verkabelung (110) der ECU (104) aufnehmen.

15. Triebwerk (100) nach einem der vorhergehenden Ansprüche, wobei das Triebwerk einen Luftstromkompressionsabschnitt umfasst und sich die ECU (104) in Übereinstimmung mit oder stromabwärts von dem Luftstromkompressionsabschnitt befindet.

16. Triebwerk (100) nach einem der vorhergehenden Ansprüche, wobei das Triebwerk (100) ferner einen Auslasskonus (105) umfasst und sich die ECU (104) in dem Auslasskonus (105) befindet.

17. Triebwerk (100) nach einem der Ansprüche 1 bis 14, wobei das Triebwerk (100) ferner eine Nasenhaube (106) umfasst und sich die ECU (104) in den der Nasenhaube (106) befindet.

18. Flugzeug, umfassend ein oder mehrere Triebwerke nach einem der Ansprüche 1 bis 17.

19. Flugzeug nach Anspruch 18, wobei das Flugzeug ein senkrecht startendes und landendes (vtol-) Flugzeug ist.

20. Flugzeug nach Anspruch 19, umfassend eine Vielzahl von Triebwerken nach einem der Ansprüche 1 bis 17, zum Beispiel sechsunddreißig.

## Revendications

1. Moteur (100) pour un avion comprenant un rotor (101), un moteur électrique (103) actionnant la rotation dudit rotor (101) et une ECU (104) commandant ledit moteur électrique (103), ledit moteur (100) comprenant en outre un moyeu, ladite ECU (104) étant située dans ledit moyeu,
ladite rotation dudit rotor (101) fournissant un flux d'air principal provoquant la poussée du moteur (100) et ladite ECU (104) étant située à l'intérieur du volume défini par ledit flux principal,
**caractérisé en ce que :**
ladite ECU (104) présentant une forme axialement symétrique, par exemple ladite ECU (104) possédant une section transversale qui est circulaire ou un polygone régulier.

2. Moteur (100) selon la revendication 1, comprenant en outre un conduit (107) logeant ledit rotor (101) de sorte que ledit flux d'air principal s'écoule à l'intérieur du conduit (107).

3. Moteur (100) selon l'une quelconque des revendications précédentes, ladite ECU (104) étant agencée autour de l'axe central ou de l'axe de rotation dudit moteur (100).

4. Moteur (100) selon l'une quelconque des revendications précédentes, ledit axe de symétrie de ladite ECU (104) coïncidant avec l'axe central ou l'axe de rotation dudit moteur (100).

5. Moteur (100) selon l'une quelconque des revendications précédentes, ladite ECU comprenant une pluralité de PCB et lesdites PCB étant empilées de manière à définir le volume global de ladite ECU.

6. Moteur (100) selon l'une quelconque des revendications précédentes, ladite ECU comprenant une pluralité de PCB et une ou plusieurs desdites PCB étant placées sur la surface interne dudit moyeu.

7. Moteur (100) selon l'une quelconque des revendications précédentes, ladite ECU (104) et au moins une section dudit moyeu étant conçues en tant que composants plug and play du moteur.

8. Moteur (100) selon la revendication 7, ladite section dudit moyeu comprenant des connecteurs femelles et/ou mâles et ladite ECU (104) comprenant des connecteurs mâles et/ou femelles s'accouplant auxdits connecteurs de ladite section dudit moyeu, lesdits connecteurs étant de préférence agencés axialement autour de l'axe central.

9. Moteur (100) selon la revendication 8, ladite section dudit moyeu comprenant uniquement des connecteurs femelles et ladite ECU (104) comprenant uniquement des connecteurs mâles s'accouplant auxdits connecteurs de ladite section dudit moyeu.

10. Moteur (100) selon la revendication 8, ladite section dudit moyeu comprenant uniquement des connecteurs mâles et ladite ECU (104) comprenant uniquement des connecteurs femelles s'accouplant auxdits connecteurs de ladite section dudit moyeu.

11. Moteur (100) selon l'une quelconque des revendications précédentes, ledit moyeu comprenant une ou plusieurs ailettes (112) conçues pour refroidir ladite ECU (104), par exemple par convection forcée et/ou en dirigeant au moins une partie dudit flux principal vers ladite ECU (104).

12. Moteur (100) selon la revendication 11, lesdites ailettes (112) étant agencées de manière circonférentielle sur tout le périmètre dudit moyeu.

13. Moteur (100) selon l'une quelconque des revendications précédentes, ledit moteur (100) comprenant une ou plusieurs aubes directrices de sortie creuses et lesdites aubes directrices de sortie creuses logeant au moins une partie ou la totalité du câblage (110) de ladite ECU (104).

14. Moteur (100) selon l'une quelconque des revendications précédentes, ledit moteur (100) comprenant un ou plusieurs pylônes creux (111) et lesdits pylônes creux (111) logeant au moins une partie ou la totalité du câblage (110) de ladite ECU (104).

15. Moteur (100) selon l'une quelconque des revendications précédentes, ledit moteur comprenant une section de compression d'écoulement d'air et ladite ECU (104) étant située en correspondance ou en aval de ladite section de compression d'écoulement d'air.

16. Moteur (100) selon l'une quelconque des revendications précédentes, ledit moteur (100) comprenant en outre un cône arrière (105) et ladite ECU (104) étant située dans ledit cône arrière (105).

17. Moteur (100) selon l'une quelconque des revendications 1 à 14, ledit moteur (100) comprenant en outre une centrifugeuse (106) et ladite ECU (104) étant située dans ladite centrifugeuse (106).

18. Avion comprenant un ou plusieurs moteurs selon l'une quelconque des revendications 1 à 17.

19. Avion selon la revendication 18, ledit avion étant un avion à décollage et atterrissage verticaux (vtol).

20. Avion selon la revendication 19, comprenant une pluralité de moteurs selon l'une quelconque des revendications 1 à 17, par exemple trente-six.
